# EUROPEAN PATENT APPLICATION

(11) **EP 4 651 299 A1**
(43) Date of publication of application: **19.11.2025**
(21) Application number: 24753617.0
(22) Date of filing: 06.02.2024
(51) Int. Cl.: H01Q 1/24, H01Q 1/38, H04B 1/04, H04B 1/40, H04M 1/02

(54) **ELECTRONIC DEVICE COMPRISING ANTENNA**

(30) Priority: 08.02.2023 KR 20230017078; 16.03.2023 KR 20230034719
(71) Applicant: Samsung Electronics Co., Ltd., Suwon-si, Gyeonggi-do 16677 (KR)
(72) Inventor: PARK, Seongjin, Suwon-si, Gyeonggi-do 16677 (KR); LEE, Hyungjoo, Suwon-si, Gyeonggi-do 16677 (KR); KIM, Hosaeng, Suwon-si, Gyeonggi-do 16677 (KR); YUN, Sumin, Suwon-si, Gyeonggi-do 16677 (KR)
(74) Representative: HGF
(86) International application number: PCT/KR2024/001772
(87) International publication number: WO 2024/167292

(57) **Abstract**

An electronic device according to an embodiment comprises: a processor; a housing; a first conductive part; a second conductive part; a first wireless communication circuit configured to transmit or receive a first signal in a first frequency band through at least a portion of the first conductive part; a second wireless communication circuit configured to transmit or receive a second signal in a second frequency band different from the first frequency band through at least a portion of the second conductive part; and a matching circuit electrically connected to the second conductive part.

## Description

### [Technical Field]

The present disclosure relates to an electronic device including an antenna.

### [Background Art]

An electronic device may transmit or receive a signal through an antenna. The electronic device may include a conductive portion positioned at a portion of a periphery of a housing. At least a portion of the conductive portion may operate as an antenna radiator for transmitting and/or receiving a signal by being fed from wireless communication circuitry. The electronic device may transmit and/or receive a signal on a satellite communication frequency band through the at least a portion of the conductive portion. Since an orbit of a satellite is positioned upward from a ground, when a radiation pattern formed in an antenna radiator used for satellite communication has an upward directivity, satellite communication performance of the electronic device may be improved.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to an embodiment, an electronic device may include a processor, a housing, a first conductive portion, a second conductive portion, first wireless communication circuitry, second wireless communication circuitry, and matching circuitry. The housing may include a first periphery and a second periphery. The second periphery may be perpendicular to the first periphery. The second periphery may be longer than the first periphery. The second conductive portion may be spaced apart from the first conductive portion. The first wireless communication circuitry may be configured to transmit and/or receive a first signal on a first frequency band through at least a portion of the first conductive portion. The second wireless communication circuitry may be configured to transmit or receive a second signal on a second frequency band different from the first frequency band, through at least a portion of the second conductive portion. The matching circuitry may be electrically connected to the second conductive portion. The matching circuitry may be configured to, while the first signal is transmitted through the at least a portion of the first conductive portion, electrically connect the second conductive portion to a ground to change a directivity of a radiation pattern of an antenna radiator, which includes the at least a portion of the first conductive portion, to be directed toward an upper side of the electronic device. The matching circuitry may be configured to block the first signal provided from the second conductive portion to the second wireless communication circuitry.

According to an embodiment, an electronic device may include a processor, a first housing, a second housing 1220, a first conductive portion, a second conductive portion, first wireless communication circuitry, second wireless communication circuitry, and matching circuitry. The housing may include a first periphery and a second periphery. The second periphery may be perpendicular to the first periphery. The second periphery may be longer than the first periphery. The second housing 1220 may be rotatably connected to the first housing about a folding axis. The first conductive portion may be positioned within the first periphery. The second conductive portion may be positioned within the first periphery. The second conductive portion may be spaced apart from the first conductive portion. The first wireless communication circuitry may be configured to transmit and/or receive a first signal on a first frequency band through at least a portion of the first conductive portion. The second wireless communication circuitry may be configured to transmit or receive a second signal on a second frequency band different from the first frequency band, through at least a portion of the second conductive portion. The matching circuitry may be electrically connected to the second conductive portion. The matching circuitry may be configured to, while the first signal is transmitted through the at least a portion of the first conductive portion, electrically connect the second conductive portion to a ground to change a directivity of a radiation pattern of an antenna, which includes the at least a portion of the first conductive portion, to be directed toward an upper side of the electronic device. The matching circuitry may be configured to block the first signal provided from the second conductive portion to the second wireless communication circuitry.

### [Description of the Drawings]

FIG. 1 is a block diagram of an electronic device in a network environment according to an embodiment.
FIG. 2 illustrates a portion of an example electronic device.
FIG. 3 illustrates a radiation pattern of an antenna radiator for satellite communication.
FIGS. 4A and 4B illustrate an example electronic device including matching circuitry.
FIG. 5 illustrates an example of matching circuitry.
FIG. 6 is a graph illustrating a radiation characteristic of an antenna for satellite communication according to a parameter value of at least one passive component.
FIG. 7 is a graph illustrating a radiation characteristic of an antenna for satellite communication according to a length of a slot.
FIG. 8 illustrates an example of matching circuitry.
FIG. 9 illustrates an example of matching circuitry.
FIG. 10 illustrates an example of matching circuitry.
FIG. 11 illustrates an example of matching circuitry.
FIG. 12A illustrates an unfolded state of an example electronic device.
FIG. 12B illustrates a folded state of an example electronic device.
FIG. 13 illustrates a portion of an example electronic device.

### [Mode for Invention]

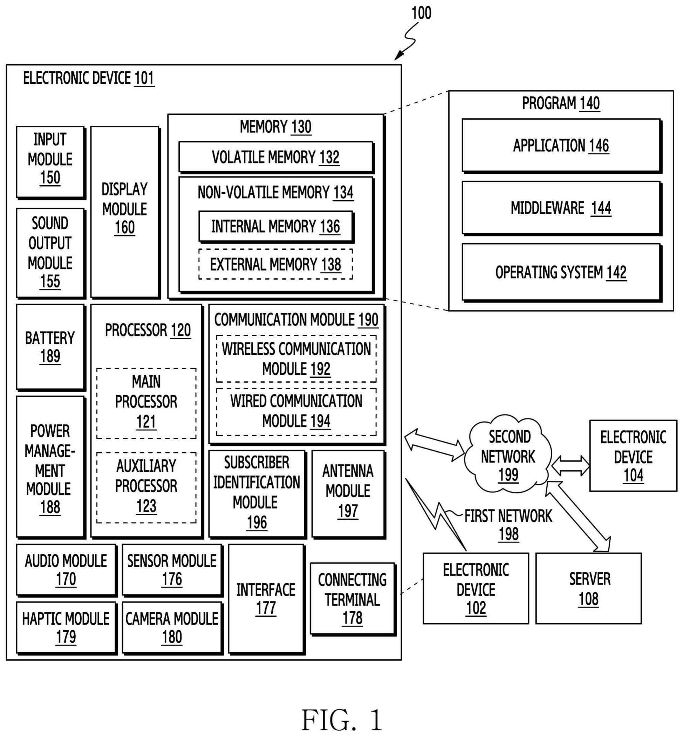

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

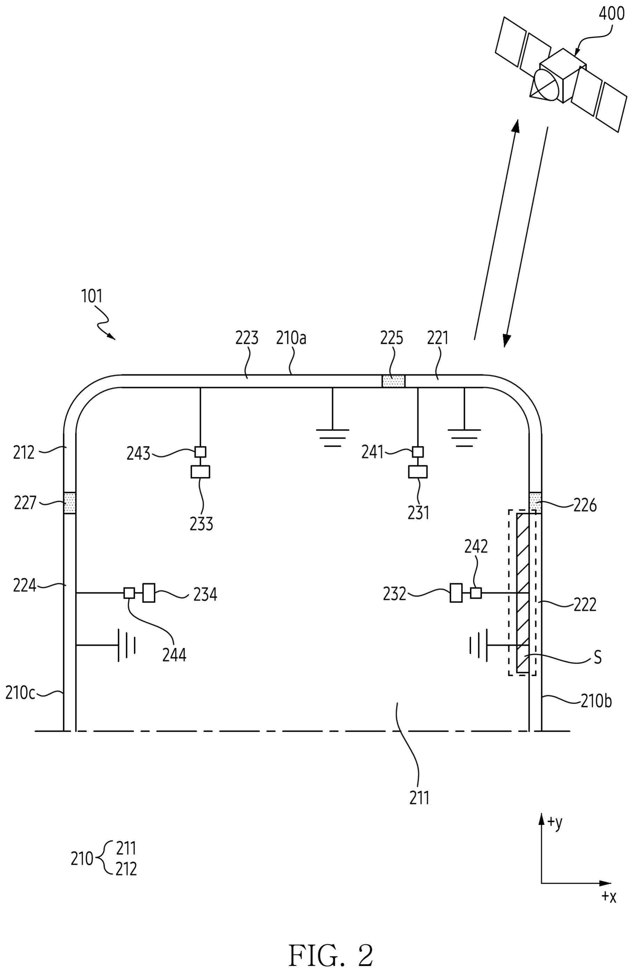

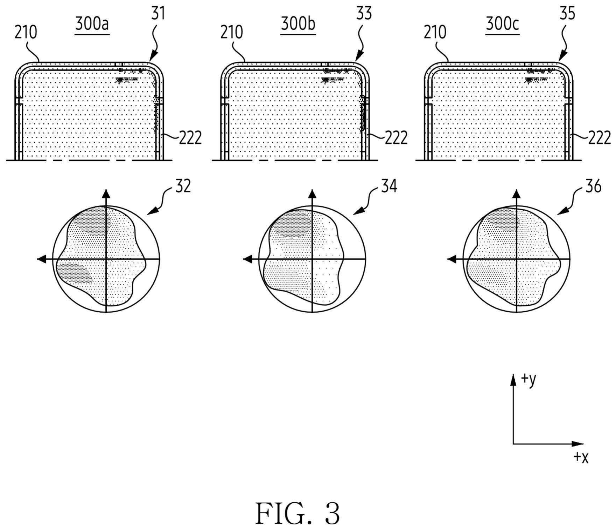

FIG. 2 illustrates a portion of an example electronic device. FIG. 3 illustrates a radiation pattern of an antenna radiator for satellite communication.

Referring to FIG. 2, an electronic device 101 according to an embodiment may include a housing 210 that defines an external appearance of the electronic device 101. The housing 210 may include a plurality of conductive portions 221, 222, 223, and 224. For example, a plurality of conductive portions 221, 222, 223, and 224 may be positioned along a periphery of the housing 210. The plurality of conductive portions 221, 222, 223, and 224 may be electrically disconnected(or isolated) by being spaced apart from each other by non-conductive portions 225, 226, and 227. For example, the housing 210 may include a first conductive portion 221, a second conductive portion 222, a third conductive portion 223, and/or a fourth conductive portion 224.

According to an embodiment, the housing 210 may include a first periphery 210a, a second periphery 210b, and a third periphery 210c. For example, the second periphery 210b and the third periphery 210c may be substantially perpendicular to the first periphery 210a. The second periphery 210b may extend from an end of the first periphery 210a, in a direction perpendicular to the first periphery 210a. The third periphery 210c may extend from another end of the first periphery 210a, in the direction perpendicular to the first periphery 210a. For example, the first periphery 210a may define a periphery in the +y direction (e.g., upper end) of the housing 210. The second periphery 210b may define a periphery in the +x direction (e.g., right side) of the housing 210. The third periphery 210c may define a periphery in the -x direction (e.g., left side) of the housing 210. Although not illustrated, the housing 210 may include a fourth periphery opposite to the first periphery 210a. The housing 210 may have a substantially rectangular bar shape by the first periphery 210a, the second periphery 210b, the third periphery 210c, and the fourth periphery. For example, lengths of the second periphery 210b and the third periphery 210c may be longer than a length of the first periphery 210a. For example, the housing 210 may have a shape in which a length in the y-axis direction is longer than a length in the x-axis direction so as to be easily gripped by a user. For example, with respect to the housing 210 having a bar-shape with an approximately rectangular parallelepiped structure, a long periphery may be referred to as a major axis, and a short periphery may be referred to as a minor axis.

According to an embodiment, the first conductive portion 221 may be positioned along a portion of the first periphery 210a and a portion of the second periphery 210b. For example, the first conductive portion 221 may extend from a first non-conductive portion 225 within the first periphery 210a to a second non-conductive portion 226 within the second periphery 210b. According to an embodiment, the second conductive portion 222 may be positioned along another portion of the second periphery 210b. For example, the second conductive portion 222 may extend from the second non-conductive portion 226 along the second periphery 210b. The second conductive portion 222 may be spaced apart from the first conductive portion 221 by the second non-conductive portion 226. According to an embodiment, the third conductive portion 223 may be positioned along another portion of the first periphery 210a and a portion of the third periphery 210c. For example, the third conductive portion 223 may extend from the first non-conductive portion 225 to a third non-conductive portion 227 within the third periphery 210c. The third conductive portion 223 may be spaced apart from the first conductive portion 221 by the first non-conductive portion 225. According to an embodiment, the fourth conductive portion 224 may be positioned along another portion of the third periphery 210c. For example, the fourth conductive portion 224 may extend from the third non-conductive portion 227 along the third periphery 210c. The fourth conductive portion 224 may be spaced apart from the third conductive portion 223 by the third non-conductive portion 227.

According to an embodiment, the housing 210 may include a side member 212 and a support member 211. For example, the side member 212 may be a portion of the housing 210 forming a lateral side including peripheries of the housing 210. The side member 212 may be referred to as a side frame, a side wall, or a side bezel. For example, the support member 211 may be at least partially surrounded by the side member 212. The support member 211 may be partially connected to the side member 212. According to an embodiment, a slot S may be disposed in a portion between the side member 212 and the support member 211. For example, the slot S may be formed by filling an opening region with a non-conductive material. For example, the slot S may be a portion of an opening region positioned between the second conductive portion 222 and the support member 211. The slot S may be understood as a term indicating a non-conductive portion disposed in an opening region between the plurality of conductive portions 221, 222, 223, 224 and the support member 211. In the present disclosure, the meaning of a term described as 'slot' is not limited to the term itself and may be referred to as a slit or an opening slit. For example, the second conductive portion 222 and the slot S may form at least a portion of a slot antenna capable of transmitting and/or receiving a signal.

According to an embodiment, the electronic device 101 may include first wireless communication circuitry 231 and second wireless communication circuitry 232. For example, at least a portion of the plurality of conductive portions 221, 222, 223, and 224 may operate as an antenna radiator. According to an embodiment, the first wireless communication circuitry 231 may be configured to transmit and/or receive a first signal on a first frequency band, through an antenna radiator including at least a portion of the first conductive portion 221. For example, the first wireless communication circuitry 231 may provide the first signal to the first conductive portion 221 through a first feeding portion 241. The first signal provided to the first conductive portion 221 may be radiated to the outside of the electronic device 101 through at least a portion of the first conductive portion 221. The first signal radiated to the outside of the electronic device 101 may be transmitted to an external electronic device (e.g., satellite 400). A first signal radiated from the external electronic device may be received through at least a portion of the first conductive portion 221. In the present disclosure, the first signal is used as a term for indicating a signal on the first frequency band. In the above description, a reception signal and a transmission signal were referred to as the first signal in order to indicate that the signals are on the first frequency band, but it does not mean that the first signal received through at least a portion of the first conductive portion 221 and the first signal radiated through at least a portion of the first conductive portion 221 are the same signal. Hereinafter, the second signal may be interpreted in the same manner.

According to an embodiment, the second wireless communication circuitry 232 may be configured to transmit and/or receive a second signal on a second frequency band different from the first frequency band through an antenna radiator including at least a portion of the second conductive portion 222. For example, the second wireless communication circuitry 232 may provide the second signal to the second conductive portion 222 through a second feeding portion 242. The second signal provided to the second conductive portion 222 may be radiated through at least a portion of the second conductive portion 222. For example, third wireless communication circuitry 233 may provide a third signal on a third frequency band to the third conductive portion 223 through a third feeding portion 243. For example, fourth wireless communication circuitry 234 may provide a fourth signal on a fourth frequency band to the fourth conductive portion 224 through a fourth feeding portion 244.

According to an embodiment, the first signal may be a signal on a satellite frequency band. For example, the first frequency band may include a satellite communication frequency band used in a non-terrestrial network using only a satellite network without a terrestrial network. For example, in an area where a terrestrial network is not provided, the electronic device 101 may be configured to communicate with a satellite 400 through the first signal.

According to an embodiment, the first wireless communication circuitry 231 may be configured to perform satellite communication using at least a portion of the first conductive portion 221. Since an orbit of the satellite 400 is located hundreds of kilometers to tens of thousands of kilometers above the ground, a relative location of the satellite 400 with respect to the electronic device 101 may be an upper side or an upward direction with respect to the electronic device 101 in a state in which a user naturally grips the electronic device 101. For example, in the electronic device 101 including the housing 210 that has a bar-shape with an approximately rectangular parallelepiped structure, when it is natural to use the electronic device 101 by gripping a major axis (e.g., the second periphery 210b and/or the third periphery 210c), an upper side or an upward direction indicating a relative location of the satellite 400 with respect to the electronic device 101 may indicate an extension direction of the major axis (e.g., the +y direction with respect to the electronic device 101). For example, in a case of the electronic device 101 including the housing 210 that has a bar-shape with an approximately rectangular parallelepiped structure, it may be natural to use the electronic device 101 in a state in which the first periphery 210a is directed in the +y direction. Alternatively, the upper side or the upward direction may indicate a direction facing above a head of a user using the electronic device 101. According to an embodiment, when a radiation pattern formed in an antenna radiator including at least a portion of the first conductive portion 221 has a directivity directed toward the upper side or the upward direction of the electronic device 101 while the electronic device 101 performs satellite communication, the electronic device 101 may have high radiation efficiency.

According to an embodiment, while the first wireless communication circuitry 231 transmits the first signal through at least a portion of the first conductive portion 221, a radiation current may flow along at least a portion of the first conductive portion 221. The radiation current flowing along at least a portion of the first conductive portion 221 may be excited to another conductive portion (e.g., the second conductive portion 222, the third conductive portion 223, and/or the fourth conductive portion 224) adjacent to the first conductive portion 221. A coupling current may be formed in the other conductive portion (e.g., the second conductive portion 222, the third conductive portion 223, and/or the fourth conductive portion 224). For example, a radiation current flowing along at least a portion of the first conductive portion 221 may be excited to the second conductive portion 222 adjacent to the first conductive portion 221, and a coupling current may be formed along the second conductive portion 222. The coupling current may affect a radiation pattern formed on at least a portion of the first conductive portion 221. Due to the influence, a radiation pattern of an antenna radiator performing satellite communication may be changed.

Referring to FIG. 3, while an antenna radiator including at least a portion of a first conductive portion (e.g., the first conductive portion 221 of FIG. 2) transmits a first signal, a radiation pattern of the antenna radiator including the at least a portion of the first conductive portion 221 may be changed according to a state of a second conductive portion (e.g., the second conductive portion 222 of FIG. 2).

A state 300a of FIG. 3 indicates a state in which second wireless communication circuitry (e.g., the second wireless communication circuitry 232 of FIG. 2) provides a second signal to a feeding portion of the second conductive portion 222 through a second feeding portion (e.g., the second feeding portion 242 of FIG. 2), while first wireless communication circuitry (e.g., the first wireless communication circuitry 231 of FIG. 2) transmits a first signal through at least a portion of the first conductive portion 221. For example, the state 300a of providing the second signal to the feeding portion of the second conductive portion 222 may be referred to as a state in which impedance of an antenna including at least a portion of the second conductive portion 222 is matched to 50 ohms.

A state 300b of FIG. 3 indicates a state in which the second feeding portion 242 and the second conductive portion 222 are electrically disconnected while the first wireless communication circuitry 231 transmits the first signal through at least a portion of the first conductive portion 221. A state 300c of FIG. 3 indicates a state in which a conductive portion of the second conductive portion 222 is electrically connected to a ground while the first wireless communication circuitry 231 transmits the first signal through at least a portion of the first conductive portion 221. The state 300c may be referred to as a short state in which a ground portion (e.g., ground point) of the second conductive portion 222 and a ground of the electronic device 101 are electrically connected.

A current distribution 31 of FIG. 3 illustrates a current formed in a housing (e.g., the housing 210 of FIG. 2) in the state 300a. A current distribution 33 of FIG. 3 illustrates a current formed in the housing 210 in the state 300b. A current distribution 35 of FIG. 3 illustrates a current distribution formed in the housing 210 in the state 300c. A radiation pattern 32 of FIG. 3 illustrates a radiation pattern of an antenna radiator including at least a portion of the first conductive portion 221, in the state 300a. A radiation pattern 34 of FIG. 3 illustrates a radiation pattern of the antenna radiator including at least a portion of the first conductive portion 221, in the state 300b. A radiation pattern 36 of FIG. 3 illustrates a radiation pattern of the antenna radiator including at least a portion of the first conductive portion 221, in the state 300c.

Comparing the current distributions 31, 33, and 35 illustrated in FIG. 3, a coupling current formed in the second conductive portion 222 in the state 300b may be relatively greater than a coupling current formed in the second conductive portion 222 in the state 300a and the state 300c. Referring to the current distribution 33, since the coupling current formed in the second conductive portion 222 is relatively large, a change in a radiation pattern may be the largest in the state 300b. For example, the radiation pattern 34 in the state 300b may have a narrower directivity than the radiation pattern 32 in the state 300a and the radiation pattern 36 in the state 300c.

In the state 300a, referring to the radiation pattern 32 of the antenna radiator including at least a portion of the first conductive portion 221, a peak directivity may be about 3 dBi (decibel isotropic). In the state 300b, referring to the radiation pattern 34 of the antenna radiator including at least a portion of the first conductive portion 221, the peak directivity may be about 3.5 dBi. In the state 300c, referring to the radiation pattern 36 of the antenna radiator including at least a portion of the first conductive portion 221, the peak directivity may be about 2.8 dBi.

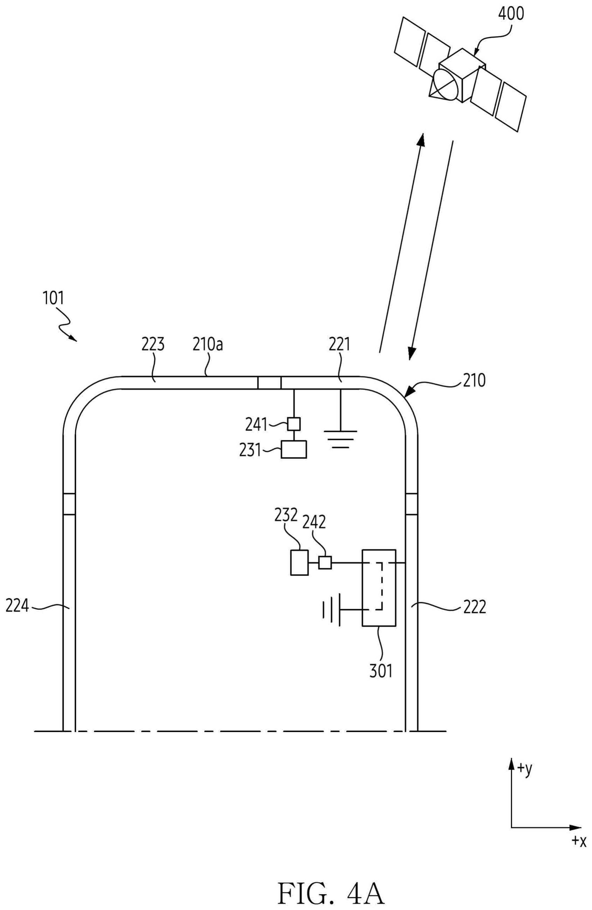

According to an embodiment, when an electrical connection between the second feeding portion 242 and the second conductive portion 222 is blocked, a change in a radiation pattern of the antenna radiator including at least a portion of the first conductive portion 221 may be large due to a coupling current flowing through the second conductive portion 222. The change in the radiation pattern may highly change the peak directivity of the antenna radiator including at least a portion of the first conductive portion 221. According to an embodiment, when an antenna radiator including at least a portion of the first conductive portion 221 is used for satellite communication, it is configured to change a directivity of a radiation pattern formed in the antenna radiator to be directed toward the satellite 400, by controlling a coupling current formed in the second conductive portion 222. Matching circuitry (e.g., the first matching circuitry 301 of FIG. 4A) may be electrically connected to another conductive portion (e.g., the second conductive portion 222, the third conductive portion 223, and/or the fourth conductive portion 224), adjacent to the first conductive portion 221, distinct from the first conductive portion 221 used for satellite communication. Hereinafter, matching circuitry for controlling a coupling current formed in the other conductive portion (e.g., the second conductive portion 222, the third conductive portion 223, and/or the fourth conductive portion 224) will be described with reference to the drawings.

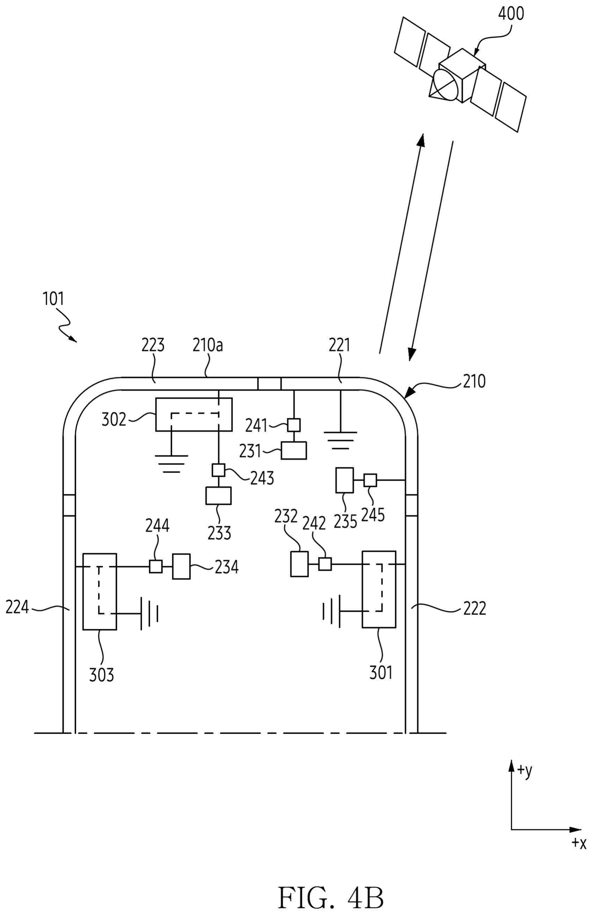

FIGS. 4A and 4B illustrate an example electronic device including matching circuitry.

Referring to FIG. 4A, an electronic device 101 according to an embodiment may include first matching circuitry 301. The first matching circuitry 301 may be electrically connected to a second conductive portion 222, which is adjacent to a first conductive portion 221 used for satellite communication.

According to an embodiment, at least a portion of a plurality of conductive portions 221, 222, 223, and 224 may operate as an antenna radiator for transmitting and/or receiving a signal on a designated frequency band. For example, first wireless communication circuitry 231 may be configured to transmit and/or receive a first signal on a first frequency band through an antenna radiator including at least a portion of the first conductive portion 221. For example, second wireless communication circuitry 232 may be configured to transmit and/or receive a second signal on a second frequency band through an antenna radiator including at least a portion of the second conductive portion 222.

According to an embodiment, the first conductive portion 221 may be used for satellite communication. For example, the first frequency band may include a satellite communication frequency band (e.g., 1.6 GHz). For example, at least a portion of the first conductive portion 221 may operate as an antenna radiator configured to transmit and/or receive a first signal, which is a satellite communication signal. The first wireless communication circuitry 231 may be configured to transmit and/or receive the first signal on the first frequency band through at least a portion of the first conductive portion 221. A satellite 400 may be positioned in an upper side or an upward direction (e.g., +y direction) with respect to the electronic device 101. Since the satellite 400 is positioned on the upper side with respect to the electronic device 101, when a radiation pattern formed on the antenna radiator including at least a portion of the first conductive portion 221 has a directivity directed toward the upper side, satellite communication performance of the electronic device 101 may be improved.

According to an embodiment, the antenna radiator including at least a portion of the first conductive portion 221 may operate as an antenna radiator configured to transmit and/or receive a signal different from a first signal, which is a satellite communication signal. For example, referring to FIG. 4B, fifth wireless communication circuitry 235 may transmit and/or receive a signal on another frequency band different from the first frequency band, through at least a portion of the first conductive portion 221. For example, the first conductive portion 221 may receive a fifth signal from a fifth feeding portion 245. The other frequency band may include a frequency band used in a legacy network.

According to an embodiment, the first matching circuitry 301 may be configured to electrically connect the second conductive portion 222 to a ground, to change a directivity of a radiation pattern formed on the antenna radiator including at least a portion of the first conductive portion 221 to the upward direction. For example, the first signal may be transmitted through at least a portion of the first conductive portion 221. During transmission of the first signal, a coupling current may be formed in the second conductive portion 222 adjacent to the first conductive portion 221, through coupling from the first conductive portion 221. When the coupling current flows along the second conductive portion 222, a radiation current may be formed along the second conductive portion 222. The first signal transmitted and/or received through the antenna radiator including at least a portion of the first conductive portion 221 may be induced to the second conductive portion 222. As the first signal is induced to the second conductive portion 222, a radiation pattern of the antenna radiator including at least a portion of the first conductive portion 221 may be partially changed in a direction (e.g., +x direction or -y direction) other than the upward direction (e.g., +y direction). Since a directivity with respect to the upward direction facing the satellite 400 decreases, satellite communication performance of the electronic device 101 may be deteriorated.

According to an embodiment, in a state in which the second conductive portion 222 is connected to a ground through the first matching circuitry 301, the first signal coupled to the second conductive portion 222 may not generate a radiation current in the second conductive portion 222. Since the radiation current is not formed in the second conductive portion 222, the radiation current may be concentrated on the first conductive portion 221 and its surroundings. As the radiation current for the first signal is concentrated on the first conductive portion 221 and its surroundings, a radiation pattern of the antenna radiator including at least a portion of the first conductive portion 221 may have a strong directivity toward the upward direction. According to an embodiment, satellite communication performance of the electronic device 101 may be improved through the radiation pattern having a strong directivity with respect to the upward direction.

According to an embodiment, the first matching circuitry 301 may be configured to block the first signal coupled to the second conductive portion 222 from being provided to the second wireless communication circuitry 232. For example, while the first signal is transmitted through at least a portion of the first conductive portion 221, the first matching circuitry 301 may be configured to block the first signal provided from the second conductive portion 222 to the second wireless communication circuitry 232. For example, the first matching circuitry 301 may be impedance matching circuitry for impedance matching of the antenna including at least a portion of the second conductive portion 222. For example, the first matching circuitry 301 may be configured to pass a second signal provided from the second wireless communication circuitry 232 to the second conductive portion 222 and block the second signal from being transmitted to a ground.

In FIG. 4A, it is described that the electronic device 101 includes the first matching circuitry 301 electrically connected to the second conductive portion 222, but is not limited thereto. Referring to FIG. 4B, the electronic device 101 according to an embodiment may include a plurality of matching circuitry 301, 302, and 303. For example, the electronic device 101 may include first matching circuitry 301 electrically connected to the second conductive portion 222, second matching circuitry 302 electrically connected to the third conductive portion 223, and/or third matching circuitry 303 electrically connected to the fourth conductive portion 224. However, it is not limited thereto. For example, according to the structure and number of plurality of conductive portions 221, 222, 223, and 224, the number of matching circuitry may be changed.

According to an embodiment, the plurality of matching circuitry 301, 302, and 303 may be configured to change a directivity of the radiation pattern formed in the antenna radiator including at least a portion of the first conductive portion 221 to the upward direction. The second matching circuitry 302 and/or the third matching circuitry 303 may perform substantially the same function as the first matching circuitry 301. The second matching circuitry 302 and/or the third matching circuitry 303 may be configured to electrically connect the third conductive portion 223 and/or the fourth conductive portion 224 to the ground, respectively. For example, the second matching circuitry 302 may be configured to, while the first signal is transmitted and/or received through at least a portion of the first conductive portion 221, electrically connect the third conductive portion 223 to the ground. As the first signal coupled to the third conductive portion 223 is concentrated on the first conductive portion 221 and/or the first conductive portion 221 and a portion adjacent thereto, the radiation pattern of the antenna radiator including at least a portion of the first conductive portion 221 may have a directivity toward the upward direction.

According to an embodiment, the second matching circuitry 302 and/or the third matching circuitry 303 may be configured to block a first signal provided from the third conductive portion 223 and/or the fourth conductive portion 224 to the third wireless communication circuitry 233 and/or the fourth wireless communication circuitry 234, to change a directivity of the radiation pattern formed in the antenna radiator including at least a portion of the first conductive portion 221 to the upward direction.

For example, the second matching circuitry 302 may be configured to, while the first signal is transmitted through at least a portion of the first conductive portion 221, block the first signal provided from the third conductive portion 223 to the third wireless communication circuitry 233. For example, the third matching circuitry 303 may be configured to, while the first signal is transmitted through at least a portion of the first conductive portion 221, block the first signal provided from the fourth conductive portion 224 to the fourth wireless communication circuitry 234.

In FIGS. 4A and 4B, the first matching circuitry 401, the second matching circuitry 402, and the third matching circuitry 403 have been described to increase the directivity of the electronic device 101 to an upper side (e.g., +y direction). However, embodiments of the present disclosure are not limited thereto. For example, for cellular communication (e.g., L band (1GHz to 2GHz band) that requires the directivity to the upper side direction through the first conductive portion 221 as well as satellite 400, the electronic device 101 may include the first matching circuitry 401, the second matching circuitry 402, and/or the third matching circuitry 403. For example, a case where the electronic device 101 receives a signal from a satellite navigation device (e.g., global positioning system (GPS)), and/or a case where the electronic device 101 serves a non-terrestrial network using 5G non-terrestrial networks (5G NTN) is included. The first matching circuitry 401, the second matching circuitry 402, and/or the third matching circuitry 403 may be variously implemented, may be implemented identically to each other, or may be implemented differently. Hereinafter, various examples of matching circuitry will be described.

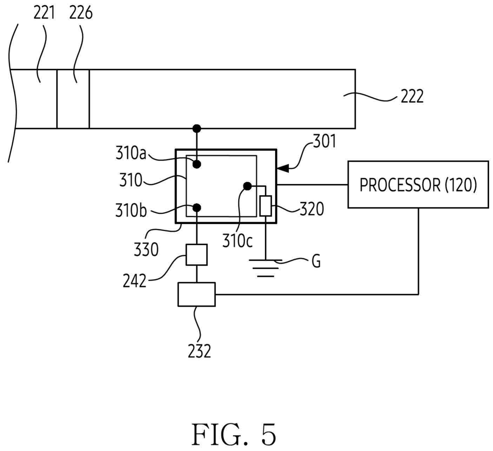

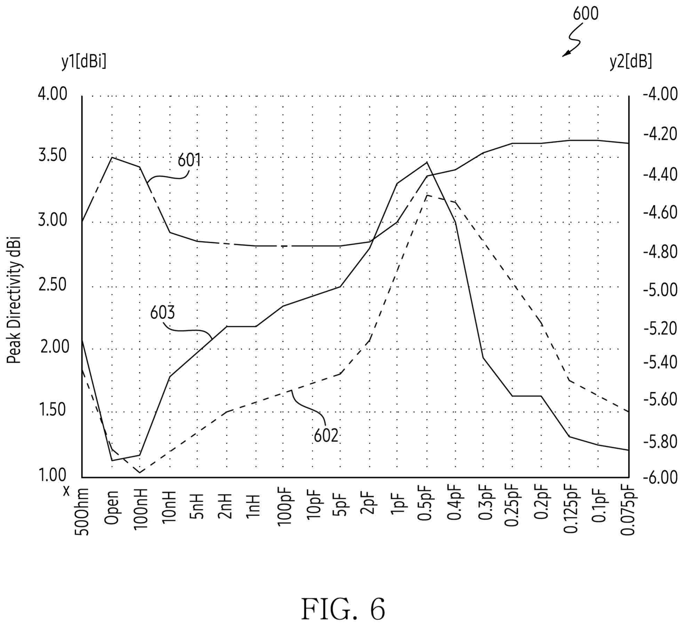

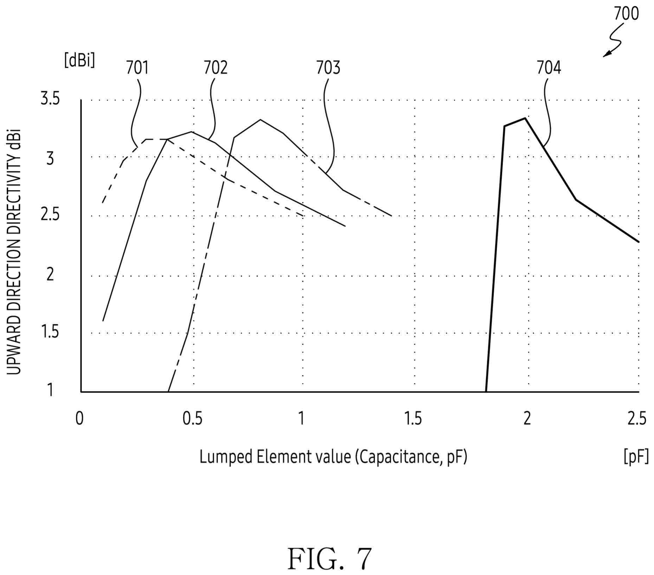

FIG. 5 illustrates an example of matching circuitry. FIG. 6 is a graph illustrating a radiation characteristic of an antenna for satellite communication according to a parameter value of at least one passive component. FIG. 7 is a graph illustrating a radiation characteristic of an antenna for satellite communication according to a length of a slot.

The description of FIG. 5 has been illustrated using a second conductive portion 222 as an example, but it is not limited thereto. For example, the second conductive portion 222 may correspond to a third conductive portion (e.g., the second conductive portion 223 of FIG. 4B) and/or a fourth conductive portion (e.g., the fourth conductive portion 224 of FIG. 4B). The second wireless communication circuitry 232 may correspond to third wireless communication circuitry (e.g., the third wireless communication circuitry 233 of FIG. 4B) and/or fourth wireless communication circuitry (e.g., the fourth wireless communication circuitry 234 of FIG. 4B). The first matching circuitry 301 may correspond to second matching circuitry (e.g., the second matching circuitry 302 of FIG. 4B) and/or third matching circuitry (e.g., the third matching circuitry 303 of FIG. 4B).

Referring to FIG. 5, the second conductive portion 222 may be electrically connected to the first matching circuitry 301. According to an embodiment, the first matching circuitry 301 may include a switch circuit 310 and a tuner 330 including at least one passive component 320. For example, at least one passive component 320 may include at least one of an inductor and a capacitor, but is not limited thereto.

According to an embodiment, the switch circuit 310 may be operatively connected to the processor 120. The switch circuit 310 being operatively connected to the processor 120 may refer to a case where the processor 120 and the switch circuit 310 are directly connected to transmit an electric signal for controlling the switch circuit 310, or a case where the processor 120 and the switch circuit 310 are indirectly connected to transmit the electric signal from the processor 120 to the switch circuit 310 through other components.

According to an embodiment, the switch circuit 310 may be configured to electrically connect the second conductive portion 222 to the second wireless communication circuitry 232 or a ground G. For example, the switch circuit 310 may include a first terminal 310a electrically connected to a feeding portion of the second conductive portion 222, a second terminal 310b electrically connected to a second feeding portion 242 and the second wireless communication circuitry 232, and a third terminal 310c electrically connected to the at least one passive component 320. When the first terminal 310a and the second terminal 310b are connected, the second conductive portion 222 may be electrically connected to the second feeding portion 242 and the second wireless communication circuitry 232. For example, in a state in which the first terminal 310a and the second terminal 310b are connected, at least a portion of the second conductive portion 222 may operate as an antenna radiator for transmitting and/or receiving a signal on a second frequency band. For example, when the first terminal 310a and the third terminal 310c are connected, the second conductive portion 222 may be electrically connected to the ground G. The at least one passive component 320 may be electrically connected to the ground G.

According to an embodiment, the processor 120 may be configured to, while an electronic device (e.g., the electronic device 101 of FIG. 4A) performs satellite communication, control the switch circuit 310 to electrically disconnect the second conductive portion 222 from the second wireless communication circuitry 232. According to an embodiment, memory (e.g., the memory 130 of FIG. 1) may store instructions. The instructions stored in the memory 130 may cause the electronic device 101, when executed by the processor 120, to control the switch circuit 310 to electrically disconnect the second conductive portion 222 from the second wireless communication circuitry 232, while the first signal is transmitted and/or received through at least a portion of the first conductive portion 221.

For example, the processor 120 may be configured to, while the first signal is transmitted and/or received through at least a portion of the first conductive portion 221, control the switch circuit 310 to connect the first terminal 310a and the third terminal 310c. In a state in which the first terminal 310a and the third terminal 310c are connected, the second conductive portion 222 may be electrically disconnected from the second wireless communication circuitry 232. Since the second conductive portion 222 is electrically disconnected from the second wireless communication circuitry 232, the first signal provided from the second conductive portion 222 to the second wireless communication circuitry 232 may be blocked. The state in which the first terminal 310a and the third terminal 310c are connected may correspond to the state 300b of FIG. 3. For example, the state in which the first terminal 310a and the third terminal 310c are connected may correspond to a state in which the second conductive portion 222 is electrically disconnected from the second wireless communication circuitry 232 and the second feeding portion 242. According to an embodiment, as the second conductive portion 222 is electrically disconnected from the second wireless communication circuitry 232, a radiation pattern of an antenna radiator including at least a portion of the first conductive portion 221 may have an upward direction directivity.

According to an embodiment, the second conductive portion 222 may be connected to a ground G according to a state of the switch circuit 310 of the first matching circuitry 301. For example, the state in which the first terminal 310a and the third terminal 310c are connected may be a ground state in which the second conductive portion 222 is connected to the ground G. As the second conductive portion 222 maintains the ground state while the first conductive portion 221 transmits the first signal, the first signal transmitted and/or received through the first conductive portion 221 may not generate a radiation current to the second conductive portion 222. Since the radiation current is not formed to the second conductive portion 222, the radiation current may be concentrated on the first conductive portion 221 and a portion adjacent to the first conductive portion 221 (e.g., a portion of the second conductive portion 222 adjacent to the first conductive portion 221). When a radiation current due to coupling of the first signal is concentrated on the first conductive portion 221 and a portion adjacent to the first conductive portion 221, a radiation current formed in the first conductive portion 221 may be changed to be concentrated in upward radiation. As the radiation current for the first signal is concentrated on the first conductive portion 221 and a portion adjacent to the first conductive portion 221, a radiation pattern of the antenna including at least a portion of the first conductive portion 221 may have an upward direction directivity.

According to an embodiment, at least one passive component 320 may be electrically connected to an electrical path between the second conductive portion 222 and the ground G. The passive component 320 may have a specified parameter value (e.g., inductance or capacitance). Based on the parameter value of the passive component 320, intensity of a coupling current formed in the second conductive portion 222 may be changed. The coupling current formed in the second conductive portion 222 may affect the radiation pattern of the antenna radiator including at least a portion of the first conductive portion 221. According to an embodiment, the at least one passive component 320 may have a parameter value for changing a directivity of the radiation pattern of the antenna radiator including at least a portion of the first conductive portion 221 to be directed toward an upper side of the electronic device 101.

Referring to FIG. 6, a radiation characteristic of the antenna including at least a portion of a first conductive portion (e.g., the first conductive portion 221 of FIG. 5) may be changed according to a parameter value of at least one passive component (e.g., the at least one passive component 320 of FIG. 5). The x-axis of graph 600 of FIG. 6 is a parameter value of the at least one passive component 320, the y1-axis of graph 600 is a directivity (unit: dBi), and the y2-axis of graph 600 is a gain (unit: decibel (dB)). A first graph 601 is a graph illustrating a change in peak directivity of the antenna including at least a portion of the first conductive portion 221, according to a parameter value of the at least one passive component 320. A second graph 602 is a graph illustrating a change in an upward direction directivity of the antenna including at least a portion of the first conductive portion 221, according to a parameter value of the at least one passive component 320. A third graph 603 is a graph illustrating radiation efficiency of the antenna including at least a portion of the first conductive portion 221, according to a parameter value of the at least one passive component 320.

Referring to the graph 600 of FIG. 6, as a parameter value of the at least one passive component 320 is changed, a peak directivity, an upward direction directivity, and radiation efficiency of an antenna including at least a portion of the first conductive portion 221 may be changed. According to an embodiment, when a parameter value of the at least one passive component 320 is about 0.4 picofarad (pF) or about 0.5 pF, a peak directivity, an upward direction directivity, and radiation efficiency of an antenna including at least a portion of the first conductive portion 221 may be high. According to an embodiment, in a state in which a second conductive portion (e.g., the second conductive portion 222 of FIG. 5) and a ground (e.g., the ground G of FIG. 5) are electrically connected through the switch circuit 310, a parameter value of the at least one passive component 320 may be about 0.4 pF or about 0.5 pF, to change a directivity of a radiation pattern of an antenna radiator including at least a portion of the first conductive portion 221, to be directed toward an upper side of an electronic device (e.g., the electronic device 101 of FIG. 4A). However, the above-described numerical values are merely examples and are not limited thereto. For example, the parameter value of the at least one passive component 320 may vary according to a size of a housing (e.g., the housing 210 of FIG. 2).

Referring to FIG. 7, according to a length of a slot (e.g., the slot S of FIG. 2), a parameter value of at least one passive component (e.g., the at least one passive component 320 of FIG. 5) for improving satellite communication performance of an electronic device (e.g., the electronic device 101 of FIG. 4A) may be changed. For example, since the slot S in contact with an inner side of the second conductive portion 222 and the second conductive portion 222 may operate as a slot antenna, a length of the slot S may affect an electromagnetic characteristic of an antenna radiator. According to an embodiment, a parameter value of the at least one passive component 320 for changing the directivity of the radiation pattern of the antenna radiator including at least a portion of the first conductive portion 221 to be directed toward the upper side of the electronic device 101 may be based on the length of the slot S. The x-axis of graph 700 of FIG. 7 is a parameter value (unit: pF) of the at least one passive component 320, and the y-axis of graph 700 is an upward direction directivity (unit: dBi).

When a wavelength corresponding to a resonance frequency of the second signal is λ, a fourth graph 701 is a graph illustrating a change in an upward direction directivity of an antenna including at least a portion of the first conductive portion 221, according to a parameter value of the at least one passive component 320 when a length of the slot S is 0.2 λ. A fifth graph 702 is a graph illustrating a change in an upward direction directivity of an antenna including at least a portion of the first conductive portion 221, according to a parameter value of the at least one passive component 320 when a length of the slot S is 0.19 λ. A sixth graph 703 is a graph illustrating a change in an upward direction directivity of an antenna including at least a portion of the first conductive portion 221, according to a parameter value of the at least one passive component 320 when a length of the slot S is 0.18 λ. A seventh graph 704 is a graph illustrating a change in an upward direction directivity of an antenna including at least a portion of the first conductive portion 221, according to a parameter value of the at least one passive component 320 when a length of the slot S is 0.08 λ.

Referring to the graph 700 of FIG. 7, the upward direction directivity of the antenna including at least a portion of the first conductive portion 221 may be changed according to the length of the slot S. For example, referring to the fourth graph 701, when the length of the slot S is 0.2 λ, the upward direction directivity of the antenna may be highest at about 0.3 pF. For example, referring to the fifth graph 702, when the length of the slot S is 0.19 λ, the upward direction directivity of the antenna may be highest at about 0.5 pF. For example, referring to the sixth graph 703, when the length of the slot S is 0.18 λ, the upward direction directivity of the antenna may be highest at about 0.8 pF. For example, referring to the fourth graph 701, when the length of the slot S is 0.08 λ, the upward direction directivity of the antenna may be the highest at about 2 pF. According to an embodiment, a parameter value of the at least one passive component 320 for increasing the upward direction directivity of the antenna may vary according to a length of the slot S in contact with the second conductive portion 222. The at least one passive component 320 may improve satellite communication performance of the electronic device 101 by having an optimal parameter value for increasing an upward direction directivity of the antenna according to a length of the slot S.

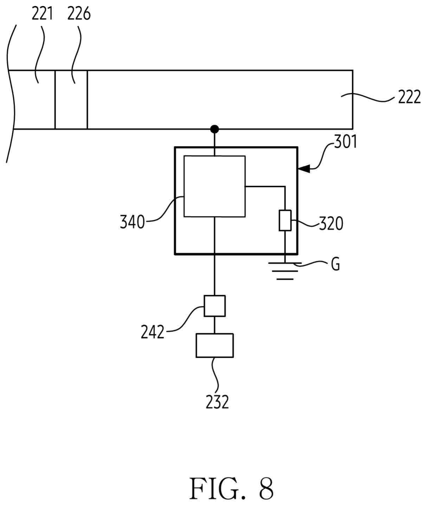

FIG. 8 illustrates an example of matching circuitry.

The description of FIG. 8 has been described using the second conductive portion 222 as an example, but it is not limited thereto. For example, the second conductive portion 222 may correspond to the third conductive portion 223 and/or the fourth conductive portion 224. The second wireless communication circuitry 232 may correspond to third wireless communication circuitry (e.g., the third wireless communication circuitry 233 of FIG. 4B) and/or fourth wireless communication circuitry (e.g., the fourth wireless communication circuitry 234 of FIG. 4B). The first matching circuitry 301 may correspond to second matching circuitry (e.g., the second matching circuitry 302 of FIG. 4B) and/or third matching circuitry (e.g., the third matching circuitry 303 of FIG. 4B).

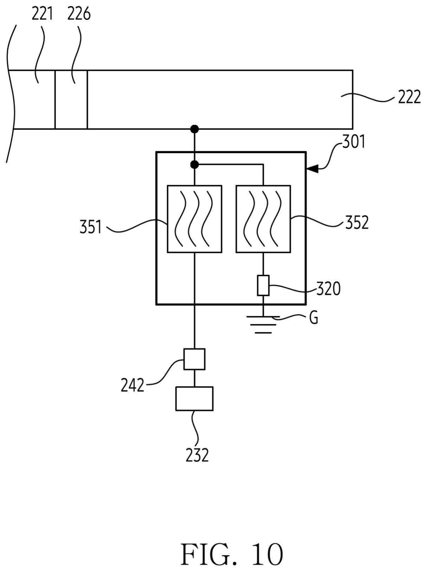

Referring to FIG. 8, the second conductive portion 222 may be electrically connected to the first matching circuitry 301. According to an embodiment, the first matching circuitry 301 may include a duplexer 340 and at least one passive component 320. For example, the duplexer 340 may include at least one filter (e.g., the first filter 351 and/or the second filter 352 of FIG. 10). The at least one passive component 320 may include at least one of an inductor and a capacitor. However, it is not limited thereto.

According to an embodiment, the duplexer 340 may be used to filter a signal provided to the second wireless communication circuitry 232, based on whether the electronic device 101 performs satellite communication. According to an embodiment, the duplexer 340 may be configured to, while a first signal is transmitted through at least a portion of the first conductive portion 221, electrically connect the second conductive portion 222 to a ground G and prevent the first signal from being transmitted to the second wireless communication circuitry 232.

According to an embodiment, the duplexer 340 may be configured to, while the electronic device 101 is not performing satellite communication, provide a second signal provided from the second wireless communication circuitry 232 and a second feeding portion 242 to the second conductive portion 222. As the duplexer 340 provides the second signal to the second conductive portion 222, at least a portion of the second conductive portion 222 may operate as an antenna radiator for transmitting and/or receiving the second signal on a second frequency band. For example, the duplexer 340 may be configured to, while the electronic device 101 performs satellite communication through at least a portion of the first conductive portion 221, filter the first signal provided from the second conductive portion 222 to the second wireless communication circuitry 232. As the duplexer 340 filters the first signal, the electronic device 101 may correspond to the state 300b of FIG. 3 in which the switch circuit 310 between the second wireless communication circuitry 232 and the second feeding portion 242 and the second conductive portion 222 is opened. According to an embodiment, as the duplexer 340 filters the first signal provided to the second wireless communication circuitry 232, a radiation pattern of an antenna radiator including at least a portion of the first conductive portion 221 may have an upward direction directivity.

According to an embodiment, the duplexer 340 may be configured to, while the electronic device 101 performs satellite communication, electrically connect the second conductive portion 222 to the ground G. For example, in a state in which the second conductive portion 222 is connected to the ground G through the duplexer 340, the first signal coupled to the second conductive portion 222 may not generate a radiation current in the second conductive portion 222. Since the radiation current is not formed in the second conductive portion 222, the radiation current may be concentrated on the first conductive portion 221 and a portion adjacent to the first conductive portion 221 (e.g., a portion of the second conductive portion 222 adjacent to the first conductive portion 221). Since the radiation current for the first signal is concentrated on the first conductive portion 221 and the portion adjacent to the first conductive portion 221, a radiation pattern of the antenna radiator including at least a portion of the first conductive portion 221 may have a directivity directed toward an upward direction.

According to an embodiment, at least one passive component 320 may be electrically connected to an electrical path between the second conductive portion 222 and the ground G. For example, the passive component 320 may have a specified parameter value. Based on a parameter value of the passive component 320, intensity of a coupling current formed in the second conductive portion 222 may be changed. The coupling current formed in the second conductive portion 222 may affect the radiation pattern of the antenna radiator including at least a portion of the first conductive portion 221. According to an embodiment, the at least one passive component 320 may have a parameter value for changing the directivity of the radiation pattern of the antenna radiator including at least a portion of the first conductive portion 221, to be directed toward an upper side of the electronic device 101. For example, the parameter value of the at least one passive component 320 may be about 0.4 pF or about 0.5 pF to change the directivity of the radiation pattern of the antenna radiator including at least a portion of the first conductive portion 221, to be directed toward the upper side of the electronic device 101. However, the above-described numerical values are merely examples and are not limited thereto. For example, the parameter value of the at least one passive component 320 may vary according to a size of the housing 210.

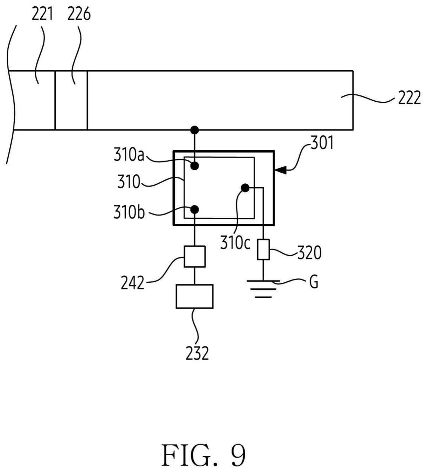

FIG. 9 illustrates an example of matching circuitry.

The description of FIG. 9 has been described using a second conductive portion 222 as an example, but it is not limited thereto. For example, the second conductive portion 222 may correspond to a third conductive portion 223 and/or a fourth conductive portion 224. The second wireless communication circuitry 232 may correspond to third wireless communication circuitry (e.g., the third wireless communication circuitry 233 of FIG. 4B) and/or fourth wireless communication circuitry (e.g., the fourth wireless communication circuitry 234 of FIG. 4B). The first matching circuitry 301 may correspond to second matching circuitry (e.g., the second matching circuitry 302 of FIG. 4B) and/or third matching circuitry (e.g., the third matching circuitry 303 of FIG. 4B).

Referring to FIG. 9, the second conductive portion 222 may be electrically connected to the first matching circuitry 301. According to an embodiment, the first matching circuitry 301 may include a switch circuit 310. For example, the switch circuit 310 may be electrically connected to at least one passive component 320 distinct from the first matching circuitry 301. For example, the at least one passive component 320 may include at least one of an inductor and a capacitor, but is not limited thereto.

According to an embodiment, the switch circuit 310 may be operatively connected to the processor 120. According to an embodiment, the switch circuit 310 may be configured to electrically connect the second conductive portion 222 to the second wireless communication circuitry 232 or a ground G. For example, the switch circuit 310 may include a first terminal 310a connected to a feeding portion of the second conductive portion 222, a second terminal 310b connected to a second feeding portion 242 and the second wireless communication circuitry 232, and a third terminal 310c connected to the ground G. When the first terminal 310a and the second terminal 310b are connected, the second conductive portion 222 may be electrically connected to the second feeding portion 242 and the second wireless communication circuitry 232. When the first terminal 310a and the third terminal 310c are connected, the second conductive portion 222 may be electrically connected to the ground G.

According to an embodiment, the processor 120 may be configured to, while the electronic device 101 performs satellite communication, control the switch circuit 310 to electrically disconnect the second conductive portion 222 from the second wireless communication circuitry 232. According to an embodiment, instructions stored in memory (e.g., the memory 130 of FIG. 1) may cause the electronic device 101, when executed by the processor 120, to control the switch circuit 310 to electrically disconnect the second conductive portion 222 from the second wireless communication circuitry 232, while the first signal is transmitted through at least a portion of the first conductive portion 221.

For example, while the first signal is transmitted through at least a portion of the first conductive portion 221, the processor 120 may control the switch circuit 310 to connect the first terminal 310a and the third terminal 310c. In a state in which the first terminal 310a and the third terminal 310c are connected, the second conductive portion 222 may be electrically disconnected from the second wireless communication circuitry 232. Since the second conductive portion 222 is electrically disconnected from the second wireless communication circuitry 232, a first signal provided from the second conductive portion 222 to the second wireless communication circuitry 232 may be blocked. The state in which the first terminal 310a and the third terminal 310c are connected may correspond to the state 300c of FIG. 3. For example, the state in which the first terminal 310a and the third terminal 310c are connected may correspond to a state in which the second conductive portion 222 are electrically disconnected from the second wireless communication circuitry 232 and the second feeding portion 242. According to an embodiment, as the second conductive portion 222 is electrically disconnected from the second wireless communication circuitry 232, a radiation pattern of an antenna radiator including at least a portion of the first conductive portion 221 may have an upward direction directivity.

According to an embodiment, the second conductive portion 222 may be connected to the ground G according to a state of the switch circuit 310 of the first matching circuitry 301. For example, the state in which the first terminal 310a and the third terminal 310c are connected may be a ground state in which the second conductive portion 222 is connected to the ground G. As the second conductive portion 222 maintains the ground state while the first conductive portion 221 transmits the first signal, the first signal transmitted and/or received through the first conductive portion 221 may not generate a radiation current to the second conductive portion 222. Since the radiation current is not formed in the second conductive portion 222, the radiation current may be concentrated on the first conductive portion 221 and a portion adjacent to the first conductive portion 221 (e.g., a portion of the second conductive portion 222 adjacent to the first conductive portion 221). As the radiation current for the first signal is concentrated on the first conductive portion 221 and the portion adjacent to the first conductive portion 221, the radiation pattern may have an upward direction directivity.

According to an embodiment, the at least one passive component 320 may be electrically connected to an electrical path between the second conductive portion 222 and the ground G. In an embodiment, the passive component 320 may have a specified parameter value. For example, based on a parameter value of the passive component 320, intensity of a coupling current formed in the second conductive portion 222 may be changed. The coupling current formed in the second conductive portion 222 may affect the radiation pattern of the antenna radiator including at least a portion of the first conductive portion 221. According to an embodiment, the at least one passive component 320 may have a parameter value for changing a directivity of the radiation pattern of the antenna radiator including at least a portion of the first conductive portion 221, to be directed toward an upper side of the electronic device 101. For example, the parameter value of the at least one passive component 320 may be about 0.4 pF or about 0.5 pF to change the directivity of the radiation pattern of the antenna radiator including at least a portion of the first conductive portion 221, to be directed toward the upper side of the electronic device 101. However, the above-described numerical values are merely examples and are not limited thereto. For example, the parameter value of the at least one passive component 320 may vary according to a size of the housing 210.

FIG. 10 illustrates an example of matching circuitry.

The description of FIG. 10 has been described using a second conductive portion 222 as an example, but is not limited thereto. For example, the second conductive portion 222 may correspond to a third conductive portion 223 and/or a fourth conductive portion 224. The second wireless communication circuitry 232 may correspond to third wireless communication circuitry (e.g., the third wireless communication circuitry 233 of FIG. 4B) and/or fourth wireless communication circuitry (e.g., the fourth wireless communication circuitry 234 of FIG. 4B). The first matching circuitry 301 may correspond to second matching circuitry (e.g., the second matching circuitry 302 of FIG. 4B) and/or third matching circuitry (e.g., the third matching circuitry 303 of FIG. 4B).

Referring to FIG. 10, the second conductive portion 222 may be electrically connected to the first matching circuitry 301. According to an embodiment, the first matching circuitry 301 may include a first filter 351, a second filter 352, and at least one passive component 320. For example, the at least one passive component 320 may include at least one of an inductor and a capacitor, but is not limited thereto. Unlike the illustration in FIG. 10, the at least one passive component 320 connected to the electrical path between the second conductive portion 222 and the ground G may be omitted. For example, a pad (or terminal) capable of being connected to the at least one passive component 320 in the electrical path between the second conductive portion 222 and the ground G may be not connected (NC) or open.

According to an embodiment, the first filter 351 may be electrically connected to an electrical path between the second conductive portion 222 and the second wireless communication circuitry 232. The second filter 352 may be electrically connected to an electrical path between the second conductive portion 222 and the ground G. According to an embodiment, the first filter 351 may be configured to, while the electronic device 101 performs satellite communication, filter a first signal provided from the second conductive portion 222 to the second wireless communication circuitry 232. For example, while the first signal is transmitted through at least a portion of the first conductive portion 221, the first signal provided from the second conductive portion 222 to the second wireless communication circuitry 232 may be blocked through the first filter 351. Since the first filter 351 blocks the first signal, the electronic device 101 may correspond to the state 300b of FIG. 3 in which the switch circuit 310 between the second wireless communication circuitry 232 and the second conductive portion 222, and the second feeding portion 242 is opened. According to an embodiment, as the first filter 351 blocks the first signal provided to the second conductive portion 222, a radiation pattern of an antenna radiator including at least a portion of the first conductive portion 221 may have an upward direction directivity. According to an embodiment, the first filter 351 may include a band stop filter (BSF) configured to filter a signal on a first frequency band.

According to an embodiment, while the electronic device 101 performs satellite communication, the second filter 352 may concentrate, through coupling from the first conductive portion 221, a radiation current by the first signal coupled to the second conductive portion 222 in the first conductive portion 221 and a portion adjacent to the first conductive portion 221. For example, the first signal may be coupled to the second conductive portion 222 adjacent to the first conductive portion 221 used for satellite communication. The first signal provided to the second conductive portion 222 may be provided to the second filter 352. The first signal provided to the second filter 352 may be provided to the ground G, by passing through the second filter 352. As the first signal provided to the second conductive portion 222 through coupling is provided to the ground G, the radiation current may be concentrated on the first conductive portion 221 and a portion adjacent to the first conductive portion 221. Due to the concentration of the radiation current, the radiation pattern of the antenna radiator including at least a portion of the first conductive portion 221 may have an upward direction directivity. According to an embodiment, the second filter 352 may include a band pass filter (BPF) configured to pass a signal on the first frequency band.

According to an embodiment, the at least one passive component 320 may be electrically connected to an electrical path between the second conductive portion 222 and the ground G. In an embodiment, the passive component 320 may have a specified parameter value. Based on a parameter value of the passive component 320, intensity of a coupling current formed in the second conductive portion 222 may be changed. The coupling current formed in the second conductive portion 222 may affect the radiation pattern of the antenna radiator including at least a portion of the first conductive portion 221. According to an embodiment, the at least one passive component 320 may have a parameter value for changing a directivity of the radiation pattern of the antenna radiator including at least a portion of the first conductive portion 221, to be directed toward an upper side of the electronic device 101. For example, the parameter value of the at least one passive component 320 may be about 0.4 pF or about 0.5 pF to change the directivity of the radiation pattern of the antenna radiator including at least a portion of the first conductive portion 221, to be directed toward the upper side of the electronic device 101. However, the above-described numerical values are merely examples and are not limited thereto. For example, the parameter value of the at least one passive component 320 may vary according to a size of the housing 210.

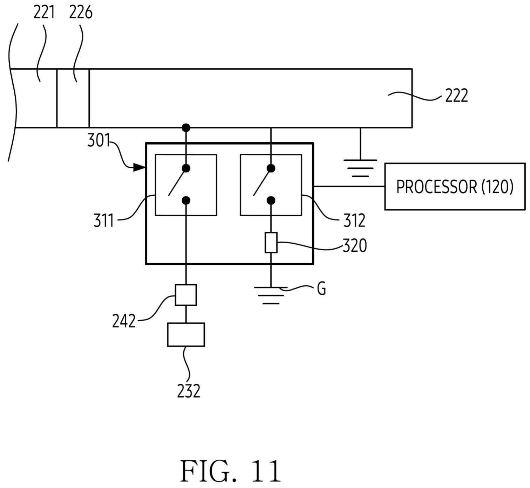

FIG. 11 illustrates an example of matching circuitry.

The description of FIG. 11 has been described using a second conductive portion 222 as an example, but is not limited thereto. For example, the second conductive portion 222 may correspond to a third conductive portion 223 and/or a fourth conductive portion 224. The second wireless communication circuitry 232 may correspond to third wireless communication circuitry (e.g., the third wireless communication circuitry 233 of FIG. 4B) and/or fourth wireless communication circuitry (e.g., the fourth wireless communication circuitry 234 of FIG. 4B). The first matching circuitry 301 may correspond to second matching circuitry (e.g., the second matching circuitry 302 of FIG. 4B) and/or third matching circuitry (e.g., the third matching circuitry 303 of FIG. 4B).

Referring to FIG. 11, the first matching circuitry 301 may include a first switch circuit 311, a second switch circuit 312, and at least one passive component 320. For example, the first switch circuit 311 may be configured to electrically connect the second conductive portion 222 to a second feeding portion 242 and the second wireless communication circuitry 232. For example, the second switch circuit 312 may be configured to electrically connect the second conductive portion 222 to a ground portion. For example, the at least one passive component 320 may include at least one of an inductor and a capacitor, but is not limited thereto. According to an embodiment, the first switch circuit 311 and the second switch circuit 312 may be operatively connected to the processor 120.

According to an embodiment, the processor 120 may be configured to adjust an electrical connection between the second conductive portion 222, the second feeding portion 242, and the second wireless communication circuitry 232 by controlling the first switch circuit 311. For example, the processor 120 may control the first switch circuit 311 so that the second conductive portion 222 is electrically disconnected from the second feeding portion 242 and the second wireless communication circuitry 232 while the electronic device 101 performs satellite communication. For example, the processor 120 may control the first switch circuit 311 so that the second conductive portion 222 is electrically connected to the second feeding portion 242 and the second wireless communication circuitry 232 while the electronic device 101 is not performing satellite communication. In a state in which the second conductive portion 222 is electrically connected to the second feeding portion 242 and the second wireless communication circuitry 232, at least a portion of the second conductive portion 222 may operate as an antenna radiator for transmitting and/or receiving a signal on a second frequency band.

According to an embodiment, the processor 120 may be configured to adjust a connection between the second conductive portion 222 and a ground G by controlling the second switch circuit 312. For example, the processor 120 may control the second switch circuit 312 so that the second conductive portion 222 is electrically connected to the ground G while the electronic device 101 performs satellite communication. In a state in which the second conductive portion 222 is electrically connected to the ground G, a first signal provided to the second conductive portion 222 through coupling may not generate a radiation current to the second conductive portion 222. The radiation current may be concentrated on the first conductive portion 221 and a portion adjacent to the first conductive portion 221. Due to the concentration of the radiation current, a radiation pattern of an antenna radiator including at least a portion of the first conductive portion 221 may have an upward direction directivity. For example, the processor 120 may control the second switch circuit 312 so that the second conductive portion 222 is electrically disconnected from the ground G while the electronic device 101 is not performing satellite communication. In a state in which the second conductive portion 222 is electrically connected to the second feeding portion 242 and the second wireless communication circuitry 232, the ground G connected to the second conductive portion 222 may provide a ground for an antenna including the second conductive portion 222.

According to an embodiment, the at least one passive component 320 may be electrically connected to an electrical path between the second conductive portion 222 and the ground G. In an embodiment, the passive component 320 may have a specified parameter value. Based on a parameter value of the passive component 320, intensity of a coupling current formed in the second conductive portion 222 may be changed. The coupling current formed in the second conductive portion 222 may affect the radiation pattern of the antenna radiator including at least a portion of the first conductive portion 221. According to an embodiment, the at least one passive component 320 may have a parameter value for changing a directivity of the radiation pattern of the antenna radiator including at least a portion of the first conductive portion 221, to be directed toward an upper side of the electronic device 101. For example, the parameter value of the at least one passive component 320 may be about 0.4 pF or about 0.5 pF to change the directivity of the radiation pattern of the antenna radiator including at least a portion of the first conductive portion 221, to be directed toward the upper side of the electronic device 101. However, the above-described numerical values are merely examples and are not limited thereto. For example, the parameter value of the at least one passive component 320 may vary according to a size of the housing 210.

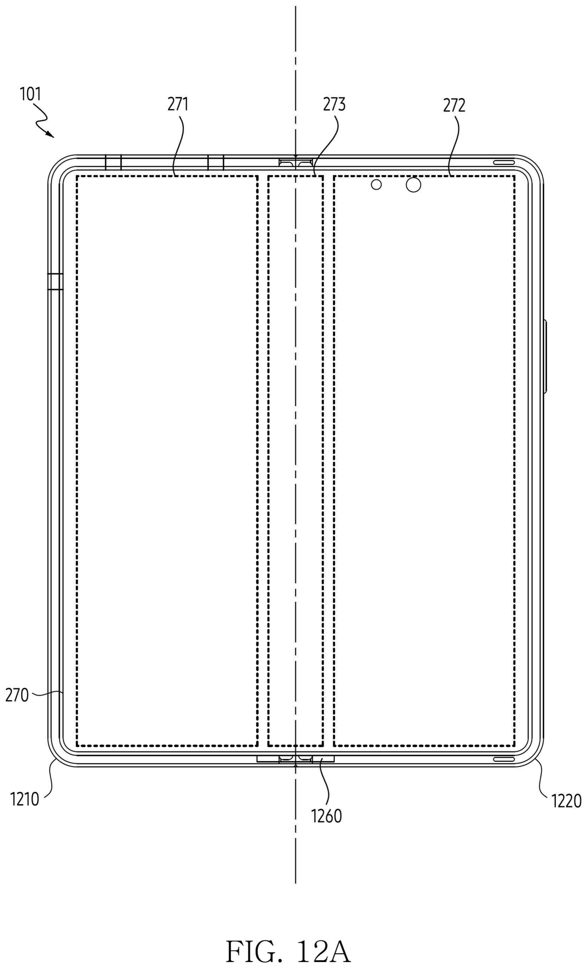

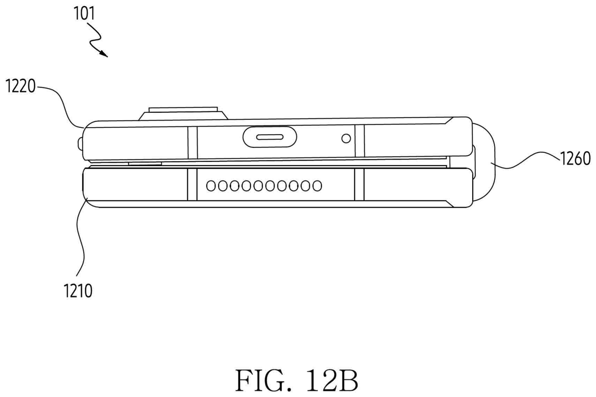

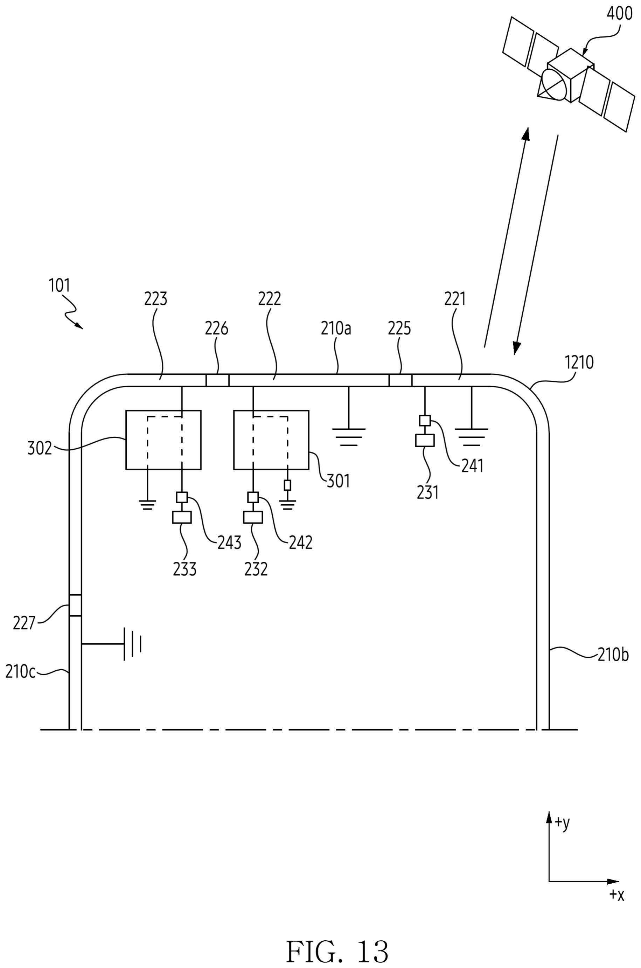

FIG. 12A illustrates an unfolded state of an example electronic device. FIG. 12B illustrates a folded state of an example electronic device. FIG. 13 illustrates a portion of an example electronic device.

Referring to FIGS. 12A and 12B, an electronic device 101 according to an embodiment may be an electronic device having a structure of being folded or unfolded. The electronic device 101 according to an embodiment may include a first housing 1210, a second housing 1220, a hinge structure 1260, and a flexible display 270. The electronic device 101 illustrated in FIGS. 12A, 12B, and 13 may be substantially the same as the electronic device 101 described with reference to FIGS. 4A to 11, except for a structure for unfolding or folding operations of the first housing 1210 and the second housing 1220, so a redundant description will be omitted. Hereinafter, configurations having the same reference numerals as the above-described configuration are indicated by the same reference numerals, and a redundant description is omitted.

According to an embodiment, the first housing 1210 and the second housing 1220 may be configured to be folded or unfolded to each other through the hinge structure 1260. For example, the hinge structure 1260 may be disposed between the first housing 1210 and the second housing 1220. Through a rotation operation of the hinge structure 1260, the first housing 1210 and/or the second housing 1220 may rotate. For example, the electronic device 101 may be configured to provide an unfolded state in which the first housing 1210 and the second housing 1220 are positioned on substantially the same plane, a folded state in which the first housing 1210 and the second housing 1220 are opposite to each other, and an intermediate state between the unfolded state and the folded state.

The flexible display 270 may include a region that is deformed according to an operation of the first housing 1210 and/or the second housing 1220. For example, the flexible display 270 may include a first display region 271, a second display region 272, and a third display region 273. The first display region 271 may be disposed on the first housing 1210. The second display region 272 may be disposed on the second housing 1220. The third display region 273 may be disposed between the first display region 271 and the second display region 272. The third display region 273 may be disposed along a folding axis. According to an embodiment, the third display region 273 may be deformed based on the second housing 1220 that rotates with respect to the first housing 1210. For example, in the unfolded state in which a direction to which the first display region 271 is directed and a direction to which the second display region 272 is directed are the same, the third display region 273 may be substantially flat. For example, in the folded state in which the direction to which the first display region 271 is directed and the direction to which the second display region 272 is directed are opposite to each other, the third display region 273 may be bent.

Referring to FIG. 13, the first housing 1210 may include a plurality of conductive portions 221, 222, and 223. For example, the plurality of conductive portions 221, 222, and 223 may be positioned along a periphery of the housing 210. The plurality of conductive portions 221, 222, and 223 may be electrically separated, by being spaced apart from each other with at least one of the non-conductive portions 225, 226, and 227 therebetween. For example, the housing 210 may include a first conductive portion 221, a second conductive portion 222, and/or a third conductive portion 223.

According to an embodiment, the first housing 1210 may include a first periphery 210a, a second periphery 210b, and a third periphery 210c. For example, the second periphery 210b and the third periphery 210c may be perpendicular to the first periphery 210a. The second periphery 210b may extend, in a direction perpendicular to the first periphery 210a, from an end of the first periphery 210a. The third periphery 210c may extend, in a direction perpendicular to the first periphery 210a, from another end of the first periphery 210a. For example, the first periphery 210a may form a periphery in the +y direction (e.g., upper end) of the first housing 1210. The second periphery 210b may form a periphery in the +x direction (e.g., right side) of the first housing 1210, and the third periphery 210c may form a periphery in the -x direction (e.g., left side) of the first housing 1210. Although not illustrated, the second periphery 210b may be connected to a hinge structure (e.g., the hinge structure 1260 of FIG. 12A).

According to an embodiment, the first conductive portion 221 may be positioned along a portion of the first periphery 210a. For example, an antenna radiator including at least a portion of the first conductive portion 221 may extend from a first non-conductive portion 225 within the first periphery 210a to a ground portion of the first conductive portion 221. According to an embodiment, the second conductive portion 222 may be positioned along another portion of the first periphery 210a. For example, the second conductive portion 222 may extend from the first non-conductive portion 225 to a second non-conductive portion 226 within the first periphery 210a. The second conductive portion 222 may be spaced apart from the first conductive portion 221 by the first non-conductive portion 225. According to an embodiment, the third conductive portion 223 may be positioned along still another portion of the first periphery 210a and a portion of the third periphery 210c. For example, the third conductive portion 223 may extend from the second non-conductive portion 226 to a third non-conductive portion 227 within the third periphery 210c. The third conductive portion 223 may be spaced apart from the second conductive portion 222 by the second non-conductive portion 226. According to an embodiment, the second conductive portion 222 may be positioned between the first conductive portion 221 and the third conductive portion 223.

According to an embodiment, at least a portion of the plurality of conductive portions 221, 222, and 223 may operate as antenna radiators. The electronic device 101 may include first wireless communication circuitry 231, second wireless communication circuitry 232, and/or third wireless communication circuitry 233. The first wireless communication circuitry 231 may be configured to transmit and/or receive a first signal on a first frequency band through the first conductive portion 221. The second wireless communication circuitry 232 may be configured to transmit and/or receive a second signal on a second frequency band through the second conductive portion 222. The third wireless communication circuitry 233 may be configured to transmit and/or receive a third signal on a third frequency band through the third conductive portion 223. According to an embodiment, the first signal may be a signal on a satellite frequency band.

According to an embodiment, the electronic device 101 may include matching circuitry 301 and 302 electrically connected to the second conductive portion 222 and the third conductive portion 223, adjacent to the first conductive portion 221. For example, the electronic device 101 may include first matching circuitry 301 electrically connected to the second conductive portion 222 and/or second matching circuitry 302 electrically connected to the third conductive portion 223. The first matching circuitry 301 and/or the second matching circuitry 302 may be configured to, while an antenna radiator including at least a portion of the first conductive portion 221 transmits the first signal, change a directivity of a radiation pattern formed in the antenna radiator, to be directed toward the satellite 400.

According to an embodiment, while the electronic device 101 transmits and/or receives the first signal, the first matching circuitry 301 and/or the second matching circuitry 302 may concentrate a radiation current by the first signal coupled to the second conductive portion 222 and/or the third conductive portion 223 through coupling from the first conductive portion 221, in the first conductive portion 221 and a portion adjacent to the first conductive portion 221. For example, the first matching circuitry 301 and/or the second matching circuitry 302 may be configured to electrically connect the second conductive portion 222 and/or the third conductive portion 223 to a ground. For example, the first matching circuitry 301 and/or the second matching circuitry 302 may be configured to electrically disconnect the second conductive portion 222 and/or the third conductive portion 223 from a feeding portion (e.g., the first feeding portion 241, the second feeding portion 242, and/or the third feeding portion 243 of FIG. 13). The radiation pattern of the antenna radiator including at least a portion of the first conductive portion 221 may be changed by the first matching circuitry 310 and/or the second matching circuitry 302. The directivity of the radiation pattern may be changed to an upward direction corresponding to a relative position of the satellite 400 with respect to the electronic device 101. The first matching circuitry 301 and/or the second matching circuitry 302 may be configured to change the directivity of the radiation pattern to an upward direction. As the radiation pattern has an upward direction directivity directed toward the satellite 400, satellite communication performance of the electronic device 101 may be improved.

Embodiments of the first matching circuitry 301 described in FIGS. 5, 8, 9, 10, and 11 may be substantially equally applied to the electronic device 101 illustrated in FIG. 13. The first matching circuitry 301 and/or the second matching circuitry 302 may be implemented in various forms. For example, the first matching circuitry 301 and/or the second matching circuitry 302 may include at least one of a tuner 330, a switch circuit 310, at least one passive component 320, a first filter 351, and/or a second filter 352. The first matching circuitry 301 and/or the second matching circuitry 302 may be configured to, while an antenna radiator including at least a portion of the first conductive portion 221 transmits the first signal, change the directivity of the radiation pattern formed in the antenna radiator, to be directed towards the satellite 400.

According to an embodiment, an electronic device (e.g., the electronic device 101 of FIG. 4A) may include a processor (e.g., the processor 120 of FIG. 5), a housing (e.g., the housing 210 of FIG. 2), a first conductive portion (e.g., the first conductive portion 211 of FIG. 4A), a second conductive portion (e.g., the second conductive portion 222 of FIG. 4A), first wireless communication circuitry (e.g., the first wireless communication circuitry 231 of FIG. 4A), second wireless communication circuitry (e.g., the second wireless communication circuitry 232 of FIG. 4A), and matching circuitry (e.g., the first matching circuitry 301 of FIG. 4A). The housing may include a first periphery (e.g., the first periphery 210a of FIG. 2) and a second periphery (e.g., the second periphery 210b of FIG. 2). The second periphery may be perpendicular to the first periphery. The second periphery may be longer than the first periphery. The second conductive portion may be spaced apart from the first conductive portion. The first wireless communication circuitry may be configured to transmit and/or receive a first signal on a first frequency band through at least a portion of the first conductive portion. The second wireless communication circuitry may be configured to transmit or receive a second signal on a second frequency band different from the first frequency, through at least a portion of the second conductive portion. The matching circuitry may be electrically connected to the second conductive portion. The matching circuitry may be configured to, while the first signal is transmitted through the at least a portion of the first conductive portion, electrically connect the second conductive portion to a ground to change a directivity of a radiation pattern of an antenna radiator including the at least a portion of the first conductive portion, to be directed toward an upper side of the electronic device. The matching circuitry may be configured to block the first signal provided from the second conductive portion to the second wireless communication circuitry. According to an embodiment of the present disclosure, while the electronic device performs satellite communication, by controlling coupling between an antenna radiator for satellite communication and a conductive portion adjacent to the antenna radiator, a radiation pattern formed in the antenna radiator may be changed to have an upward direction directivity. According to an embodiment, when a first signal is coupled to another conductive portion through coupling from the first conductive portion, the matching circuitry may change a radiation pattern of an antenna radiator including a first conductive portion by concentrating a radiation current on a first conductive portion and a portion adjacent to the first conductive portion, and electrically disconnecting another conductive portion from a feeding portion. The directivity of the radiation pattern may be changed to an upward direction corresponding to a relative position of a satellite with respect to the electronic device. The matching circuitry may be configured to change the directivity of the radiation pattern to the upward direction. Since the radiation pattern has the upward direction directivity facing the satellite, satellite communication performance of the electronic device may be improved.

According to an embodiment, the matching circuitry may include a switch circuit (e.g., the switch circuit 301 of FIG. 5) and a tuner (e.g., the tuner 330 of FIG. 5) including at least one passive component (e.g., the passive component 320 of FIG. 5). The switch circuit may be operatively connected to the processor. The switch circuit may be configured to electrically connect the second conductive portion to the second wireless communication circuitry or the ground. The passive component may be electrically connected to an electrical path between the second conductive portion and the ground. The processor may be configured to, while the first signal is transmitted through the at least a portion of the first conductive portion, control the switch circuit to electrically disconnect the second conductive portion from the second wireless communication circuitry. For example, the electronic device may include memory storing instructions. The instructions, when executed by the processor, may cause the electronic device to, while the first signal is transmitted through at least a portion of the first conductive portion, control the switch circuit to electrically disconnect the second conductive portion from the second wireless communication circuitry. According to an embodiment of the present disclosure, when a first signal is provided to a second conductive portion adjacent to a first conductive portion used for satellite communication, a tuner may be configured to concentrate a radiation current due to coupling of the first signal to a first conductive portion and a portion adjacent to the first conductive portion. Due to the concentration of the radiation current, a radiation pattern of an antenna radiator including at least a portion of the first conductive portion may have an upward direction directivity.

According to an embodiment, the at least one passive component may have a parameter value for changing the directivity of the radiation pattern of the antenna radiator including the at least a portion of the first conductive portion, to be directed toward an upper side of the electronic device, in a state in which the second conductive portion is electrically connected to and the ground through the switch circuit. According to an embodiment, the at least one passive component may have a parameter value for changing the directivity of the radiation pattern of the antenna radiator including at least a portion of the first conductive portion, to be directed toward an upper side of the electronic device.

According to an embodiment, the housing may include a slot (e.g., the slot S of FIG. 2). The slot may be in contact with an inner side of the second conductive portion. The at least one passive component may have a parameter value based on a length of the slot. According to an embodiment of the present disclosure, a parameter value of at least one passive component for improving satellite communication performance of the electronic device may be changed according to a length of the slot. According to an embodiment, a parameter value of at least one passive component for changing a directivity of a radiation pattern of a radiator for satellite communication, to be directed toward an upper side of the electronic device may be based on a length of the slot.

According to an embodiment, the matching circuitry may include a duplexer (e.g., the duplexer 340 of FIG. 8) and at least one passive component. The duplexer may be configured to, while the first signal is transmitted through the at least a portion of the first conductive portion, electrically connect the first conductive portion to the ground, and block the first signal provided from the second conductive portion to the second wireless communication circuitry. The at least one passive component may be electrically connected to an electrical path between the second conductive portion and the ground.

According to an embodiment, the duplexer may include at least one filter (e.g., the first filter 351 and/or the second filter 352 of FIG. 10). According to an embodiment of the present disclosure, while the first signal is transmitted through the at least a portion of the first conductive portion, the duplexer may concentrate a radiation current by the first signal on the first conductive portion and a portion adjacent to the first conductive portion. As the radiation current is concentrated, the radiation pattern formed in the antenna radiator including at least a portion of the first conductive portion may have an upward direction directivity.

According to an embodiment, the matching circuitry may include a switch circuit and a passive component. The switch circuit may be operatively connected to the processor. The switch circuit may be configured to electrically connect the second conductive portion to the second wireless communication circuitry or the ground. The at least one passive component may be electrically connected to an electrical path between the second conductive portion and the ground. According to an embodiment of the present disclosure, the radiation pattern formed in the antenna radiator including the at least a portion of the first conductive portion may have an upward direction directivity, by the switch circuit and the passive component.

According to an embodiment, the matching circuitry may include a first filter (e.g., the first filter 351 of FIG. 10), a second filter (e.g., the second filter 352 of FIG. 10), and at least one passive component. The first filter may be electrically connected to an electrical path between the second conductive portion and the second wireless communication circuitry. The second filter may be electrically connected to an electrical path between the second conductive portion and the ground. The at least one passive component may be electrically connected to an electrical path between the second conductive portion and the ground.

According to an embodiment, the first filter may include a band stop filter configured to filter a signal on a first frequency band. The second filter may include a band pass filter configured to pass a signal on the first frequency band. According to an embodiment of the present disclosure, as the first filter filters a first signal provided from the second conductive portion to the second wireless communication circuitry, the radiation pattern of the antenna radiator including the at least a portion of the first conductive portion may have an upward direction directivity. The first signal provided to the second filter may be provided to the ground by passing through the second filter. As the first signal provided to the second conductive portion through the coupling is provided to the ground, the radiation current may be concentrated on a first conductive portion and a portion adjacent to the first conductive portion. Due to the concentration of the radiation current, the radiation pattern of the antenna radiator including the at least a portion of the first conductive portion may have an upward direction directivity.

According to an embodiment, the matching circuitry may include a switch circuit. The switch circuit may be configured to control an electrical connection between the second conductive portion and the second wireless communication circuitry. The processor may be configured to, while the first signal is transmitted through at least a portion of the first conductive portion, control the switch circuit to electrically disconnect the second conductive portion from the second wireless communication circuitry. For example, the instructions stored in the memory, when executed by the processor, may cause the electronic device to, while the first signal is transmitted through at least a portion of the first conductive portion, control the switch circuit to electrically disconnect the second conductive portion from the second wireless communication circuitry.

According to an embodiment, the matching circuitry may include at least one passive component. The at least one passive component may be electrically connected to an electrical path between the second conductive portion and the ground.

According to an embodiment, the first frequency band may include a satellite communication frequency band. According to an embodiment of the present disclosure, the matching circuitry may change the radiation pattern of the antenna radiator used for satellite communication, to be directed toward the upward direction.

According to an embodiment, the first conductive portion may be positioned along a portion of the first periphery and a portion of the second periphery. The second conductive portion may be positioned along another portion of the second periphery. The electronic device according to an embodiment may further include a third conductive portion (e.g., the third conductive portion 223 of FIG. 4A), third wireless communication circuitry (e.g., the third wireless communication circuitry 233 of FIG. 4A), and second matching circuitry (e.g., the second matching circuitry 302 of FIG. 4B). The third conductive portion may be spaced apart from the first conductive portion. The third conductive portion may be positioned along another portion of the first periphery and a portion of the third periphery opposite the second periphery. The third wireless communication circuitry may be configured to transmit or receive a third signal on a third frequency band different from the first frequency, through at least a portion of the third conductive portion. The second matching circuitry may be different from first matching circuitry (e.g., the first matching circuitry 301 of FIG. 4A) corresponding to the matching circuitry, and may be electrically connected to the third conductive portion. The second matching circuitry may be configured to, while the first signal is transmitted through the at least a portion of the first conductive portion, electrically connect the third conductive portion to the ground to change the directivity of a radiation pattern of the antenna radiator including at least a portion of the first conductive portion, to be directed toward the upper side of the electronic device. The second matching circuitry may be configured to block the first signal provided from the third conductive portion to the third wireless communication circuitry.

According to an embodiment, the electronic device may further include a fourth conductive portion (e.g., the fourth conductive portion 214 of FIG. 2B), fourth wireless communication circuitry (e.g., the fourth wireless communication circuitry 234 of FIG. 2B), and third matching circuitry (e.g., the third matching circuitry 303 of FIG. 2B). The fourth conductive portion may be spaced apart from the third conductive portion. The fourth conductive portion may be positioned along another portion of the third periphery. The fourth wireless communication circuitry may be configured to transmit or receive a fourth signal on a fourth frequency band different from the first frequency, through at least a portion of the third conductive portion. The third matching circuitry may be electrically connected to the fourth conductive portion. The third matching circuitry may be configured to, while the first signal is transmitted through the at least a portion of the first conductive portion, electrically connect the fourth conductive portion to the ground to change the directivity of the radiation pattern of the antenna radiator including at least a portion of the first conductive portion, to be directed toward an upper side of the electronic device. The third matching circuitry may be configured to block the first signal provided from the fourth conductive portion to the fourth wireless communication circuitry.

According to an embodiment, the electronic device may further include fifth wireless communication circuitry (e.g., the fifth wireless communication circuitry 235 of FIG. 4B). The fifth wireless communication circuitry may be configured to transmit or receive a signal on a frequency band different from the first frequency through at least a portion of the first conductive portion. According to an embodiment of the present disclosure, at least a portion of the first conductive portion may operate as an antenna radiator for transmitting and/or receiving a first signal or a second signal. The matching circuitry may change the radiation pattern formed in the antenna radiator to have an upward direction directivity within a satellite communication state in which the at least a portion of the first conductive portion transmits and/or receives the first signal. The fifth signal may include, for example, a frequency band used in a legacy network.

According to an embodiment, an electronic device (e.g., the electronic device 101 of FIG. 12A) may include a processor, a first housing (e.g., the first housing 1210 of FIG. 12A), a second housing (e.g., the second housing 1220 of FIG. 12A), a first conductive portion (e.g., the first conductive portion 211 of FIG. 13), a second conductive portion (e.g., the second conductive portion 212 of FIG. 13), first wireless communication circuitry (e.g., the first wireless communication circuitry 231 of FIG. 13), second wireless communication circuitry (e.g., second wireless communication circuitry 232 of FIG. 13), and matching circuitry (e.g., the first matching circuitry 301 of FIG. 13). The housing may include a first periphery (e.g., the first periphery 210a of FIG. 13) and a second periphery (e.g., the third periphery 210c of FIG. 13). The second periphery may be perpendicular to the first periphery. The second periphery may be longer than the first periphery. The second housing 1220 may be rotatably connected to the first housing about a folding axis. The first conductive portion may be positioned within the first periphery. The second conductive portion may be positioned within the first periphery. The second conductive portion may be spaced apart from the first conductive portion. The first wireless communication circuitry may be configured to transmit and/or receive a first signal on a first frequency band, through at least a portion of the first conductive portion. The second wireless communication circuitry may be configured to transmit or receive a second signal on a second frequency band different from the first frequency, through at least a portion of the second conductive portion. The matching circuitry may be electrically connected to the second conductive portion. The matching circuitry may be configured to, while the first signal is transmitted through at least a portion of the first conductive portion, concentrate a radiation current due to the first signal coupled to the second conductive portion through coupling from the first conductive portion to the first conductive portion and a portion adjacent to the first conductive portion, to change the directivity of the radiation pattern of the antenna including at least a portion of the first conductive portion, to the upper side of the first periphery. The matching circuitry may be configured to block the first signal provided from the second conductive portion to the second wireless communication circuitry.

According to an embodiment, the matching circuitry may include a switch circuit (e.g., the switch circuit 301 of FIG. 5) and a tuner (e.g., the tuner 330 of FIG. 5) including at least one passive component (e.g., the passive component 320 of FIG. 5). The switch circuit may be operatively connected to the processor. The switch circuit may be configured to electrically connect the second conductive portion to the second wireless communication circuitry or the ground. The passive component may be electrically connected to an electrical path between the second conductive portion and the ground. The processor may be configured to, while the first signal is transmitted through the at least a portion of the first conductive portion, control the switch circuit to electrically disconnect the second conductive portion from the second wireless communication circuitry.

According to an embodiment, the matching circuitry may include a duplexer (e.g., the duplexer 340 of FIG. 8) and at least one passive component. The duplexer may be configured to, while the first signal is transmitted through the at least a portion of the first conductive portion, electrically connect the first conductive portion to the ground and block the first signal provided from the second conductive portion to the second wireless communication circuitry.

According to an embodiment, the matching circuitry may include a switch circuit and a passive component. The switch circuit may be operatively connected to the processor. The switch circuit may be configured to electrically connect the second conductive portion to the second wireless communication circuitry or the ground. The at least one passive component may be electrically connected to an electrical path between the second conductive portion and the ground.

According to an embodiment, the matching circuitry may include a first filter (e.g., the first filter 351 of FIG. 10), a second filter (e.g., the second filter 352 of FIG. 10), and at least one passive component. The first filter may be electrically connected to an electrical path between the second conductive portion and the second wireless communication circuitry. The second filter may be electrically connected to an electrical path between the second conductive portion and the ground. The at least one passive component may be electrically connected to an electrical path between the second conductive portion and the ground.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a processor;
a housing including:
a first periphery, and
a second periphery, perpendicular to the first periphery, longer than the first periphery,
a first conductive portion;
a second conductive portion spaced apart from the first conductive portion;
first wireless communication circuitry configured to transmit or receive a first signal on a first frequency band, through at least a portion of the first conductive portion;
second wireless communication circuitry configured to transmit or receive a second signal on a second frequency band different from the first frequency band, through at least portion a of the second conducive portion; and
matching circuitry electrically connected to the second conductive portion,
wherein the matching circuitry is configured to, while the first signal is transmitted through the at least a portion of the first conductive portion:
electrically connect the second conductive portion to a ground to change a directivity of a radiation pattern of an antenna radiator, which includes the at least a portion of the first conductive portion, to be directed toward an upper side of the electronic device, and
block the first signal provided from the second conductive portion to the second wireless communication circuitry.

2. The electronic device of claim 1, further comprising memory storing instructions,
wherein the matching circuitry includes:
a switch circuit, operatively connected to the processor, configured to electrically connect the second conductive portion to the second wireless communication circuitry or the ground, and
a tuner including at least one passive component electrically connected to an electrical path between the second conductive portion and the ground, and
wherein the instructions, when executed by the processor, cause the electronic device to, while the first signal is transmitted through the at least a portion of the first conductive portion, control the switch circuit to electrically disconnect the second conductive portion from the second wireless communication circuitry.

3. The electronic device of claim 2,
wherein the at least one passive component has a parameter value for changing the directivity of the radiation pattern of the antenna radiator, which includes the at least a portion of the first conductive portion, to be directed toward the upper side of the electronic device, in a state in which the second conductive portion is electrically connected to the ground through the switch circuit.

4. The electronic device of claim 2 or 3,
wherein the housing includes a slot in contact with an inner side of the second conductive portion, and
wherein the at least one passive component has a parameter value based on a length of the slot.

5. The electronic device of any one of claims 1 to 4,
wherein the matching circuitry includes:
a duplexer, while the first signal is transmitted through the at least a portion of the first conductive portion, configured to electrically connect the first conductive portion to the ground, and to block the first signal provided from the second conductive portion to the second wireless communication circuitry, and
at least one passive component electrically connected to an electrical path between the second conductive portion and the ground.

6. The electronic device of claim 5,
wherein the duplexer includes at least one filter.

7. The electronic device of any one of claims 1 to 6,
wherein the matching circuitry includes:
a switch circuit, operatively connected to the processor, configured to electrically connect the second conductive portion to the second wireless communication circuitry or the ground, and
at least one passive component electrically connected to an electrical path between the second conductive portion and the ground.

8. The electronic device of any one of claims 1 to 7,
wherein the matching circuitry includes:
a first filter electrically connected to an electrical path between the second conductive portion and the second wireless communication circuitry,
a second filter electrically connected to an electrical path between the second conductive portion and the ground, and
at least one passive component electrically connected to an electrical path between the second conductive portion and the ground.

9. The electronic device of claim 8,
wherein the first filter includes a band stop filter configured to filter a signal on the first frequency band, and
wherein the second filter includes a band pass filter configured to pass the signal on the first frequency band.

10. The electronic device of any one of claims 1 to 9, further comprising memory storing instructions,
wherein the matching circuitry includes a switch circuit configured to control an electrical connection between the second conductive portion and the second wireless communication circuitry, and
wherein the instructions, when executed by the processor, cause the electronic device to, while the first signal is transmitted through the at least a portion of the first conductive portion, control the switch circuit to electrically disconnect the second conductive portion from the second wireless communication circuitry.

11. The electronic device of claim 10,
wherein the matching circuitry includes at least one passive component electrically connected to the second conductive portion.

12. The electronic device of any one of claims 1 to 11,
wherein the first frequency band includes a satellite communication frequency band.

13. The electronic device of any one of claims 1 to 12,
wherein the first conductive portion is positioned along a portion of the first periphery and a portion of the second periphery,
wherein the second conductive portion is positioned along another portion of the second periphery,
wherein the electronic device further comprises:
a third conductive portion, spaced apart from the first conductive portion, positioned along another portion of the first periphery and a portion of a third periphery opposite to the second periphery,
third wireless communication circuitry configured to transmit or receive a third signal on a third frequency band different from the first frequency, through at least a portion of the third conductive portion; and
second matching circuitry, different from first matching circuitry corresponding to the matching circuitry, electrically connected to the third conductive portion,
wherein the second matching circuitry is configured to, while the first signal is transmitted through the at least a portion of the first conductive portion:
electrically connect the third conductive portion to the ground to change the directivity of the radiation pattern of the antenna radiator, which includes the at least a portion of the first conductive portion, to be directed toward the upper side of the electronic device, and
block the first signal provided from the third conductive portion to the third wireless communication circuitry.

14. The electronic device of claim 13, further comprising:
a fourth conductive portion, spaced apart from the third conductive portion, positioned along another portion of the third periphery;
fourth wireless communication circuitry configured to transmit or receive a fourth signal on a fourth frequency band different from the first frequency, through the at least a portion of the third conductive portion; and
third matching circuitry electrically connected to the fourth conductive portion,
wherein the third matching circuitry is configured to, while the first signal is transmitted through the at least a portion of the first conductive portion:
electrically connect the fourth conductive portion to ground to change the directivity of the radiation pattern of the antenna radiator, which includes the at least a portion of the first conductive portion, to be directed toward an upper side of the electronic device, and
block the first signal provided from the fourth conductive portion to the fourth wireless communication circuitry.

15. The electronic device of any one of claims 1 to 14, further comprising fifth wireless communication circuitry configured to transmit or receive a signal on a frequency band different from the first frequency band, through the at least a portion of the first conductive portion.
